# EUROPEAN PATENT SPECIFICATION

(11) **EP 4 016 373 B1**
(45) Date of publication and mention of the grant of the patent: **26.11.2025**
(21) Application number: 21215506.3
(22) Date of filing: 17.12.2021
(51) Int. Cl.: G06K 7/10, A01K 11/00, A01K 1/00

(54) **APPARATUS FOR AND METHOD OF RECEIVING AN ELECTRONIC DATA SIGNAL**
VORRICHTUNG UND VERFAHREN ZUM EMPFANG EINES ELEKTRONISCHEN DATENSIGNALS
APPAREIL ET PROCÉDÉ PERMETTANT DE RECEVOIR UN SIGNAL DE DONNÉES ÉLECTRONIQUES

(30) Priority: 18.12.2020 NL 2027166
(43) Date of publication of application: 22.06.2022
(73) Proprietor: Nedap N.V., 7141 DC Groenlo (NL)
(72) Inventor: SCHREURS, Bernard Jan Gerrit, 7141 DC Groenlo (NL)
(74) Representative: V.O.

(56) References cited:
- WO-A1-2008/153393
- DE-A1- 102005 018 402
- US-A1- 2015 371 065

## Description

### Field of the invention

The present invention is directed at an apparatus for receiving an electronic data signal, in particular an electronic identification signal of a label worn by an animal, wherein the apparatus comprises two or more antennas and a receiver element, wherein each antenna of the two or more antennas has an associated reception range, wherein the receiver element is communicatively connected to the two or more antennas for receiving the electronic data signal via the antennas. The invention is further directed at a method for operating such an apparatus, and at a computer program product.

### Background

In order to enable automation of various cattle management tasks in farms, animals are often tagged with an electronically readable label. The label is worn by the animal and enables to transmit an electronic data signal, typically an electronic identification signal conveying identification data of the animal and sometimes conveying different or additional data. The labels may be active or passive labels, dependent on how the electronic data signals can be received. A passive label is a label that responds to an interrogation signal by transmitting the electronic data signal in return. Energy is typically drawn from signal received by the passive label, such as the interrogation signal, e.g. to enable operation in absence of a battery. An active label may actively transmit its electronic data signal on its own motion, e.g. periodically or dependent on certain measurable conditions.

The electronic data signals are received by receivers via an antenna connected to the receiver. The antenna has a certain reception range that is determined by the antenna design and the electronics of the receiver, such as the amount of amplification and noise reduction in the receiver. The receiver thereby is able to receive electronic data signals of animals passing through the reception range of the antenna with their labels temporarily in range thereof. The detection of the animal may then be used to control certain tasks or be provided as information to an animal management system.

Publication US 2015/0371065 A1 discloses a radio-frequency idenfictaion reeader device including a plurality of antennas, a switch module and a coaxial cable. Publication WO 2008/153393 A1 discloses a system for recognizing animals in a detection zone, wherein the animals are provided with a label that responds by transmitting a return signal with information when the label is introduced into an electromagnetic interrogation field.One disadvantage of the system is related to the reception range of the antenna, which is not always sufficient to cover a desired reception space to be monitored. In cases where the reception range is too small, the electronic data signals of some animals may not be received. If, for example, the animal management function to be performed is a counter function implemented in a cattle walkthrough, this may result in some animals being missed. In another example, if the application is milking parlor, this could result in the animal to be milked being unidentifiable by the system. This could in the best case result in an error alert to the operator, and in the worst case to loss of milking data for the animal.

### Summary of the invention

It is an object of the present invention to provide an apparatus for receiving an electronic data signal as described above, wherein the detection probability of an electronic data signal is improved and which enables to extend a reception space to any desired shape and size.

To this end, in accordance with a first aspect, there is provided herewith an apparatus for receiving an electronic data signal according to claim 1.

The present invention extends the reception space by applying a plurality of antennas in order to combine their reception ranges. However, although the reception range may be enlarged to some extent by using more than one antenna, the invention is further based on the insight that this in itself is not sufficient to enable extending the range in the most optimal manner. The mere application of multiple antennas, without any further measures, would result in these antennas influencing each other due to their presence in each others proximity. In fact, connecting multiple antennas with no further measures will result in these antennas acting as a single larger antenna. Naturally, this will increase the total reception range, but the increase will be less than the sum of all reception ranges of all antennas.

In accordance with the present invention, therefore, the antennas are activated in a time multiplexed manner. The antennas are being activated in turn: while one or more of the antennas are activated, the other antennas are deactivated. In a subsequent turn, one or more other antennas are activated while the rest of the antennas are deactivated. In other words, during each turn or cycle the switching means activate at least one first antenna of the two or more antennas while concurrently deactivating at least one second antenna of the two or more antennas, the at least one first antenna being different from the at least one second antenna. As a result, the total reception space of the arrangement of antennas will be truly the sum of all individual reception ranges of the antennas. This enables to shape the reception space in any desired way dependent on the application.

The term 'activating' is to be interpreted here as providing an electrical connection between an antenna and the receiver, which connection results in the receiver receiving electromagnetic signals from that particular antenna. The term 'deactivating' is to be interpreted as meaning the opposite of 'activating', i.e. to cease or break the connection such as to disable the receiver to receive electromagnetic signals from that respective antenna. In accordance with the invention, the antennas can be activated in turn one-by-one or in subsets (i.e. switching groups) as will be explained further down below. The minimal number of antennas that my be operated in this manner is two antennas that can be activated and deactivated alternatingly, such that only one of them is active at a time.

The switching may be performed in a time multiplexed manner at any desired switching rate. For example, the switching rate can be 5 Hz (Hertz) or 100 Hz or anything in between, the former providing a maximum potential listening time of 200 ms (milliseconds) per turn or cycle, the latter providing a maximum potential listening time of 10 ms. More preferably, the switching rate may be between 5 and 50 hertz, even more preferably between 10 and 20 hertz, such as 14 hertz. As may be appreciated, the switching rate may be determined dependent on the data rate, i.e. the rate at which data is conveyed, of the electronic data signal. At higher data rates, the listening time may be shorter, thereby enabling a higher switching rate. In this document, reference may be made to the term 'cycle' (hereinbefore also referred to as 'turn') to indicate the time available to the antenna being active at that moment, before a next antenna (or antennas) will be activated. This is related to the switching rate.

In accordance with some embodiments, the switching rate may be within a range of 5 Hz to 100 Hz. This is in particular a useful range where the transmission technology applied as implemented with the labels is RFID (ISO 18000 based, incl. ISO 18000-v1 to v7). Alternatively, of course, different technologies may likewise be applied and the invention is not limited to use thereof in combination with RFID. For example, other short and medium range wireless technologies that may be applied in combination herewith are Bluetooth (IEEE 802.15.1), Wifi (IEEE 802.11), Zigbee (IEEE 802.15.4). As may be appreciated, at higher data rates such as achievable with Bluetooth, the switching rates may be higher than 100 Hz as well dependent on the amount of data to be exchanges each cycle. Hereinbelow, the present invention is explained in relation to its use in animal management systems based on animal worn labels, which typically apply RFID. In particular, many animal management systems are based on the application of low frequency (LF) passive RFID at 134 kHz, applying a frequency shift keying (FSK) scheme to distinguish between the '0' and the '1'-valued bits. The '1'-s are transmitted as a 134 kHz signal maintained for 16 or 32 periods, whereas the '0'-s may be transmitted at 124 kHz for a duration of 16 or 32 periods. The invention, however, is not limited to LF passive RFID, but may be applied at different frequencies or different wireless technologies as referred to above. Furthermore, active RFID may be applied instead of passive RFID; or alternatively a different data modulation scheme than FSK, e.g. phase shift keying (PSK) or direct amplitude modulation. In general, it is to be kept in mind that the principles of the invention may be applied in combination with various different transmission technologies and may thus give rise to the use of different switching rates than as mentioned above.

Animal worn labels typically apply active or passive RFID technology to convey data via wireless electronic data signals. Typically RFID may be implemented operating at certain selected frequencies. At the range of interest for recognizing animal tags, this may be between 100 kHz and 200 kHz, e.g. 134 kHz (kilohertz. The raw data rate of an RFID signal depends on the selected frequency. With a 134 kHz RFID signal (low frequency (LF) passive), using frequency shift keying (FSK), the achievable data rate is between 4 and 8 Kbps (kilobit per second). Thus, for example, considering a switching rate of 5 Hz, the time duration available during a single cycle is 0,20 seconds, enabling the electronic data signal at an RFID frequency of 134 kHz to potentially transmit between 775 and 1550 bits (about 97 to 194 bytes). In reality, using a typical full duplex (Fdx) half duplex (Hdx) timing scheme during each cycle, a part of the available cycle duration is used to transmit an activation field. The tag is triggered by the activation field to send a response back to the transceiver, but also draws energy from the received activation field in order to be sufficiently charged to send the response signal. Therefore, in reality the response will follow at the end of the activation field or thereafter, and thus less than the above mentioned data capacity will be available for transmission of data from the tag to the transceiver. In some embodiments, the receiver element is a transceiver element, and the apparatus is configured for, during said activation of the at least one of the antennas, performing at least one of: receipt of the electronic data signal; or transmission of an interrogation signal, such as an activation signal. In particular, for labels working in half duplex (Hdx) mode, an activation signal may be transmitted to energize the label and/or trigger the label receiving the activation signal to send back a response. Ideally, the sending of an activation signal and the receipt of a response signal from the label will be performed subsequently during a same cycle and thereby using a same antenna (or antennas, where relevant). In Fdx mode, two-way simultaneous data signal communication is possible, and transmission and receipt may thus take place simultaneously.

In some embodiments, the switching means are configured for subsequently activating each of the two or more antennas in turn, such as to activate one of the antennas at a time during each turn. For example, if an arrangement of five antennas is applied, in accordance with this embodiment each antenna only one antenna is active at a time while the others are deactivated. Together, the five antennas would provide a large reception space, which is not compromised by antennas influencing each other.

In other or further embodiments, the switching means are configured for applying a round robin type process for subsequently activating the two or more antennas in turn. In a round robin type process, each antenna of subset of antennas (switching group) will be active during one cycle until all antennas have been activated once, after which the switching process starts anew. As may be appreciated, other switching plans are likewise possible without departing from the invention.

In some embodiments, each antenna of the two or more antennas is associated with a switching group of a plurality of switching groups, such that each switching group comprises a subset of the two or more antennas, and wherein the switching means are configured for subsequently activating one switching group in turn while deactivating the other switching groups. The switching groups have been mentioned herein before. Although a slight disadvantage of these embodiments is that antennas of a same switching group may again influence each other such as to compromise the maximum reception space, an advantage of these embodiments is that with large numbers of antenna's the switching of one antenna at a time at slower switching rates could take too much time (thereby again reducing the probability of detection of an animal). Using switching groups with multiple antennas overcomes this and thereby enables to increase the total number of antennas that can be multiplexed in this manner. Furthermore, with large numbers of antennas, the switching groups may be selected such that the distance between antennas of a same switching group is sufficiently large to prevent the problem influence between two antennas of the group.

In a particular class of the abovementioned embodiments, the apparatus further comprises a controller configured for associating each antenna of the two or more antennas with one of said switching groups, by performing the steps of: transmitting, via the antenna to be associated, an initialization signal; and measuring a receipt of the initialization signal via each other antenna of the two or more antennas. Here, the most optimal distribution of antennas into subsets such as to form switching groups, may automatically be determined by the controller by performing e.g. signal strength measurements of each initialization signal as received via each of the other antennas. The antennas receiving a strong initialization signal from a specific antenna are no good candidates to be placed in a same switching group with the one antenna providing the initialization signal. On the other hand, antennas receiving a weaker initialization signal or may be even the weakest initialization signal from the one antenna, are better candidates for the same switching group. By performing the transmission of initialization signals via each antenna and measuring thereof by the other antennas, an optimal distribution can be determined. The measuring may optionally be performed simultaneously by activating all antennas at the same time.

In some embodiments, the apparatus comprises two antennas and wherein the switching means includes a switch for alternatingly switching between the two antennas such as to activate one of the antennas at a time. This is the most basic embodiment of the invention wherein the two antennas are activated and deactivated alternatingly such as to provide a reception space being the sum of the reception ranges of the two antennas. This solution may be applied in many practical applications in an animal management system, such as a walkthrough passage for animals, a milking parlor, a feeding station, or some other particular setup providing a specific animal management function.

In many embodiments, the apparatus comprises a controller and the switching means are controlled by or provided by the controller. For example, the switching may be completely controlled by the controller controlling electronic switches or semiconductor elements, or ceasing incoming signals from some antennas in accordance with a time multiplexed switching scheme. In other embodiments, a controller may provide instructions or control signals to enable a dedicated switching element or arrangement of elements to perform the multiplexed switching.

In some of the above embodiments, the controller is configured for at least one of: controlling the switching dependent on a receipt of data in the electronic data signal; or performing said subsequently activating in accordance with a switching frequency defining switching cycles, and wherein the controller upon detecting a receipt of data via the electronic data signal during a current cycle, is configured for maintaining said activation of the at least one of the antennas for a further cycle. Here, the switching to another antenna may thus be interrupted based on the receipt of an incoming electronic data signal. For example, if the incoming electronic data signal is not yet completely received, the activation of the respective antenna via which the signal is being received may be continued for another cycle. In some embodiments, the switching may be performed such that the cycle duration may be continuously variable, e.g. with a certain minimum duration. With this, it is meant that the controller may monitor the receipt of an incoming message via the active antenna, and cut-off the cycle at any time when the complete electronic data signal (the incoming message) is received or if further reception is ceased or impaired.

In some embodiments, the switching means comprise at least one of: one or more switches, such as transistors, relays, or electronic switches; an electrically operable single pole double throw switch; an electrically operable single pole multiple way switch, such as a single pole n-way switch; an electrically operable multidirectional selector switch or rotary switch; a multiplexer, such as a time division multiplexer; a circulator switch; a switching network comprising multiple switches or switching elements, such as transistors, circulators or relays. The skilled person may recognize alternative switching structures that may likewise be applied to implement the invention, without departing from the scope of the invention.

In some embodiments, the antennas of the two or more antennas are positioned such as to be geometrically distributed for spanning the reception space in accordance with a predefined shape. As mentioned hereinabove, the antennas each provide their own reception range, and proper positioning thereof thus enables to shape the reception space such as to achieve complete coverage of even complex detection spaces.

In some embodiments, the apparatus is configured for receiving two or more electronic data signals simultaneously from different labels, and the apparatus is further configured for, based on a signal strength of each of the received electronic data signals, obtaining the data conveyed by the electronic data signal having the largest signal strength. In these embodiments, the accidental receipt of multiple electronic data signals from multiple tags being worn by different animals, can be resolved by filtering: i.e. interpreting the strongest of the received signals while ignoring the weaker signals.

In some embodiments or implementations of the invention, there is provided an animal management arrangement comprising one or more entities configured for providing an animal management function, wherein the arrangement is configured for detecting or identifying animals that use the arrangement for providing the animal management function, wherein each of the animals wears a label for providing a wireless electronic data signal conveying identification data of the animal; wherein the arrangement for enabling said detection or identification comprises an apparatus according to the first aspect, wherein the antennas of the two or more antennas span the reception space such as to effectively enable receipt of the electronic data signal of each label residing in the reception space. The animal management arrangement may be applied on a farm, and the animals may be cattle such as cows, pigs, sheep, goats, horses, camels, donkeys or other animals. However, the invention may be applied with other animal management solutions as well, such as zoo's.

In some embodiments, the arrangement comprises an animal transit facility, the transit facility including physical separators such as fences or walls, wherein the physical separators define a transit path for the animals, and wherein the antennas are geometrically arranged such that the reception space intersects the transit path. The term 'intersecting' in relation to this is intended to be interpreted as meaning that the full cross section of the transit path (over at least a part of the transit path along its length) is covered by the reception space spanned by the reception ranges of the antennas, such that all animals passing through the transit path are detectable with their labels when they reside in the reception space. Such an animal transit may be part of a larger structure, and the purpose of detection or identification of animals may differ dependent on the circumstances (e.g. controlling operation of a facility, data gathering, animal monitoring, etc.). In some embodiments, for example, the arrangement comprises an animal separation facility, the separation facility including a separation gate and an animal transit facility as mentioned above, wherein the arrangement comprises a controller for operating the separation gate dependent on the identification data obtained from the electronic data signal.

However, the invention is certainly not limited to certain of these implementations, and could be practiced otherwise such as in the below examples. In some embodiments, the arrangement provides at least one animal management function from a group comprising: a milking station, a rotary parlor, a weighing station, a feeding unit, a controllable gate; a lighting unit; a cooling unit; a ventilation unit.

In accordance with a second aspect, there is provided a method of operating an apparatus for receiving an electronic data signal according to claim 16. The particular steps performed by apparatuses of the first aspect may typically be implemented as embodiments of the present method.

In accordance with a third aspect, there is provided computer program product for operating an apparatus for receiving an electronic data signal according to claim 22.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates the detection of a neck label of a cow in a walkthrough passage in accordance with prior art;
Figure 2a schematically illustrates the detection of an ear label in a walkthrough passage in accordance with a prior art method;
Figure 2b schematically illustrates the detection of an ear label of a cow using multiple antennas;
Figure 3 schematically illustrates the detection of an ear label of a cow in a walkthrough passage using an apparatus and method in accordance with an embodiment of the present invention;
Figure 4 schematically illustrates an apparatus in accordance with an embodiment of the present invention;
Figures 5a and 5b illustrate the operation of an apparatus in accordance with a further embodiment of the present invention;
Figure 6 illustrates an apparatus in accordance with a further embodiment of the present invention;
Figure 7 illustrates an arrangement of antennas in a milking parlor in accordance with the present invention;
Figure 8 schematically illustrates a method in accordance with the present invention;
Figure 9 illustrates a possible switching scheme for an apparatus in accordance with an embodiment of the invention;
Figures 10A, 10B and 10C illustrate various example implementations in accordance with embodiments of the present invention;
Figure 11 illustrates an apparatus in accordance with a further embodiment of the present invention.

### Detailed description

In the description, throughout this document herein above and below, reference is frequently made to a 'receiver'. As may be appreciated, the term 'receiver' should be interpreted as meaning a receiver as indicated, or any element suitable for receiving electronic data signals of the types indicated, regardless of whether such elements are also capable of performing other functions. For example, a 'transceiver' which is capable of both transmitting and receiving signals may thus within the context of the invention be considered a 'receiver' as well. In some embodiments, reference is made to a 'transceiver' in order to either clarify that this class of receivers also falls within the scope of the claimed invention where it recites a 'receiver' in the appended claims, or because in the specific embodiment described the specific additional functionality of a transceiver over other types of receivers (i.e. the transmitting of signals) has a useful purpose to the described embodiment. The term 'receiver' thus must not be interpreted such as to be limited to a specific type of receivers only.

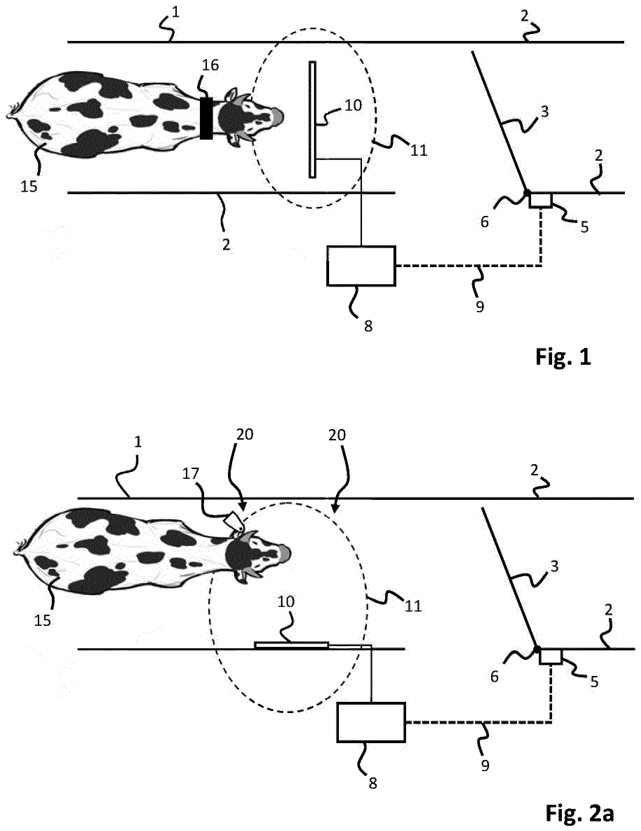

Figure 1 illustrates a walkthrough passage 1 wherein an apparatus 8 is implemented including an antenna 10 for the detection, using RFID, of cows 15 wearing neck labels 16. The walkthrough passage 1 consists of a number of physical separation or restraining means such as fences 2 or walls. At some point alongside one of the fences 2, a separation gate 3 is installed, which is operated by a controllable actuator 5 arranged near the hinge 6 of the fence 3. The controllable actuator 5 can be controlled via apparatus 8, for example in such a way that when apparatus 8 detects a cow 15 that needs to be separated (e.g. in accordance with data from a animal management system or provided as input from an operator), a control signal 9 is sent from the apparatus 8 to the actuator 5 for opening the gate 3. To detect or identify the cow 15, the cow wears a neck label 16 from which identification data is transmitted. The apparatus 8 verifies whether the identification data of cow 15 corresponds with an identifier of one of a number of pre-selected animals that are to be separated.

The antenna 10 for detecting and identifying cow 15 is installed inside the walkthrough passage 1. Around the antenna 10, with dotted lines, the detection range 11 for detecting RFID signals from neck labels, such as neck label 16, is illustrated in figure 1. The neck labels 16 transmit their identifier data via RFID, for example at a carrier frequency of 134 kHz. The setup illustrated in figure 1 may work with various different types of implementations of the RFID technology. For example, the neck label 16 may be a passive or active RFID label, and the carrier frequency of the data signal may be any standard RFID carrier frequency suitable to the application. The invention is not limited to use thereof in combination with RFID signals, and may be applied likewise in combination with other electronic data signals (e.g. Bluetooth, Zigbee, Wifi). Clearly, the detection range 11 of the antenna 10 covers the complete walkthrough passage in cross section. Therefore, any cow 15 that will pass underneath the antenna 10 will be detected using the receiver or transceiver in apparatus 8.

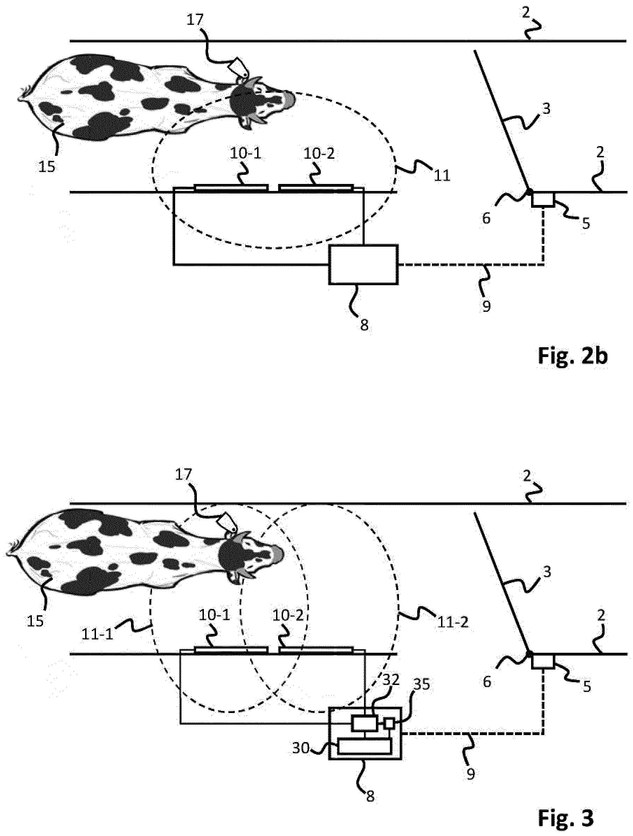

Another implementation, suitable for detecting ear tags 17, is illustrated in figures 2a and 2b. In figure 2a, ear tags 17 can be detected by apparatus 8 using antenna 10 installed on the fence 2. The antenna 10 provides a reception range 11 within which it can receive signals transmitted from ear labels such as ear labels 17. However, as follows from figure 2a, the coverage of the walkthrough passage 1 is limited, such that a cow 15 passing with its ear label 17 on the wrong side of the walkthrough passage 1, provides the risk of not being detected by the apparatus 8. If the cow 15 is not detected by the apparatus 8, the decision on whether or not to open the separation gate 3 cannot be made because the cow 15 is simply not seen. In this case, the fence 3 will remain closed (not as illustrated in figure 2a) such that the cow 15 will continue to walk through the walkthrough passage past the gate 3.

To increase the probability of detecting the cow 15 with an ear label 17, in figure 2b the apparatus 8 is implemented using two antennas 10-1, and 10-2. As may be appreciated, the rationale behind installing multiple antennas is that the additional antennas may increase the probability of detecting transmission signals, because each of the antennas 10-1 and 10-2 may receive the signal transmitted by the ear label 17. However, in reality the antennas 10-1 and 10-2 may influence each other such that they start acting as a single antenna. This coupling between the antennas 10-1 and 10-2 causes the reception range 11 to be similar to the reception range of a single long antenna installed on the fence. Instead of decreasing the risk of not detecting cow 15 walking on the side of the walkthrough passage 1, the combining of antennas 10-1 and 10-2 has in fact deteriorated the situation because the area 20 outside the range 11 of the antennas 10-1 and 10-2 is larger than in figure 2a.

Figure 3 schematically illustrates an apparatus 8 in accordance with the present invention. The apparatus 8 consists of a controller 35 and a transceiver or receiver 30. The receiver 30 is connected to antennas 10-1 and 10-2 via a switching element 32. The switching element 32 may be a multiplexer, a network of controlled switches, a circuit of semiconductor elements such as transistors, a rotary switch (controllable), or any other element that could provide switching in a multiplexed way either independently or controlled by the controller 35. The term switching means use in this document should therefore be interpreted broadly to include any such switches or switching elements mentioned that together, in combination with each other or independently, enables to perform switching in a multiplexed manner. The switching element 32 illustrated in figure 3 alternating these switches between the first antenna 10-1 and second antenna 10-2. In fact, the switching elements 32 causes the receiver 30 to receive transmitted signals from the ear tag 17 either via antenna 10-1 or via antenna 10-2, however the switching means 32 ensures that only one of the antennas 10-1 or 10-2 is in connection with the receiver 30 at the time. Hence, the alternated switching of the antennas 10-1 and 10-2 causes the antennas 10-1 and 10-2 to receive the transmitted signals from the ear tag 17 independently. If the antenna 10-1 is activated by the switching element 32, the antenna 10-2 is not activated (deactivated) and thus only the antenna 10-1 is able to receive signals transmitted from the ear tag 17. In a next switching cycle, the antenna 10-1 is deactivated while the antenna 10-2 is activated. Therefore, only antenna 10-2 during this subsequent switching cycle is able to receive the electronic data signal from the ear tag 17 if it is within the range 11-2 of antenna 10-2. By using the individual reception ranges 11-1 and 11-2 of the antennas 10-1 and 10-2, effectively the reception area (the area within which electronic data signals from the ear tag 17 can be received) is much larger. The switching between antennas 10-1 and 10-2 can be performed multiple times per second, for example using a switching frequency of 5Hz, 10Hz, 50Hz, 100Hz or anything in between these values.

As described already above, the switching rate with which connection of the antennas 10-1 and 10-2 with the receiver 30 is switched, may be made dependent on the amount of data to be transmitted via the ear tag 17 to the receiver 30. Preferably, in order to reduce any possible switching losses, the full data signal received during a single cycle of the switching element. In more sophisticated implementations, an even more sophisticated switching scheme may be applied wherein the time of being activated slightly overlaps during switching. This may also reduce switching losses and may enable the receipt of longer data signals containing more data which have a duration longer than a single switching cycle.

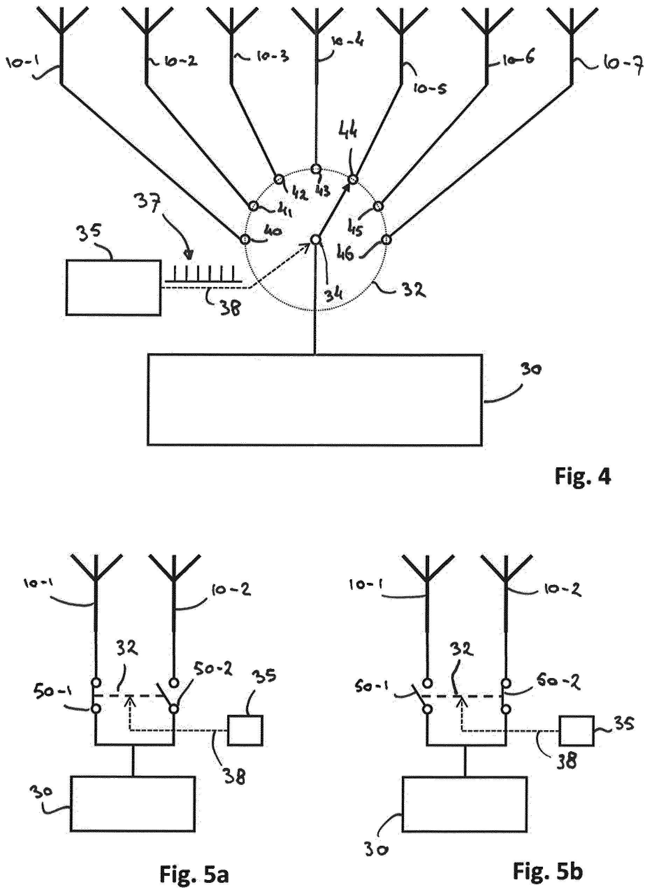

Figure 4 schematically illustrates an implementation of an apparatus 8 containing a transceiver or receiver 30, a controller 35 and a multiplexer 32. The multiplexer 32 is illustrated as a rotary switch which is controller by the controller 35 as indicated by the control signal 38. The rotary switch of the multiplex 32 consists of a first pole 34 to which the receiver 30 is electrically connected, and a plurality of further poles 40, 41, 42, 43, 44, 45 and 46 to which a plurality of antennas 10-1, 10-2, 10-3, 10-4, 10-5, 10-6 and 10-7 are electrically connected. The controller 35 provides the control signal 38 in the form of a pulse sequence 37, the pulse sequence comprises a plurality of aki distant pulses in time. Thus, the time interval between each two subsequent pulses is fixed. This determines the switching rate of the controller 35. At each pulse 37, the connection between the first pole 34 and any of the poles 40-46 switches to a next pole. For example, in figure 4 a connection is established between a first pole 34 and a second pole 44, but once a pulse from the control signal 38 is received, the connection switches over to second pole 45. This means that a next antenna 10-6 is activated and antenna 10-5 which was active until the pulse was received, will be deactivated.

Figures 5a and 5b illustrate a further implementation of an apparatus 8 in accordance with the present invention, and the working thereof. In figures 5a and 5b, the switching element 32 is in fact a double pole double throw switch (dpdt switch). The double pole double throw switch can be controlled by controller 35. The dpdt switch 32 is configured such that at all times one of the switches 50 provides an electrical connection, while the other of the switches 50 has been disconnected. The signal 38 of the controller 35 causes the dpdt switch 32 to change position. A first position is illustrated in figure 5a and a second position is illustrated in figure 5b. In the first position, the DPDT switch 32 provides a connection via switch 35-1 to antenna 10-1. The connection to antenna 10-2 is absent because switch 50-2 is open. After receipt of proper control signal 38, the switch flips sides and the situation in figure 5b will be established where antenna 10-2 is connected to the transceiver or receiver 30 while antenna 10-1 is deactivated.

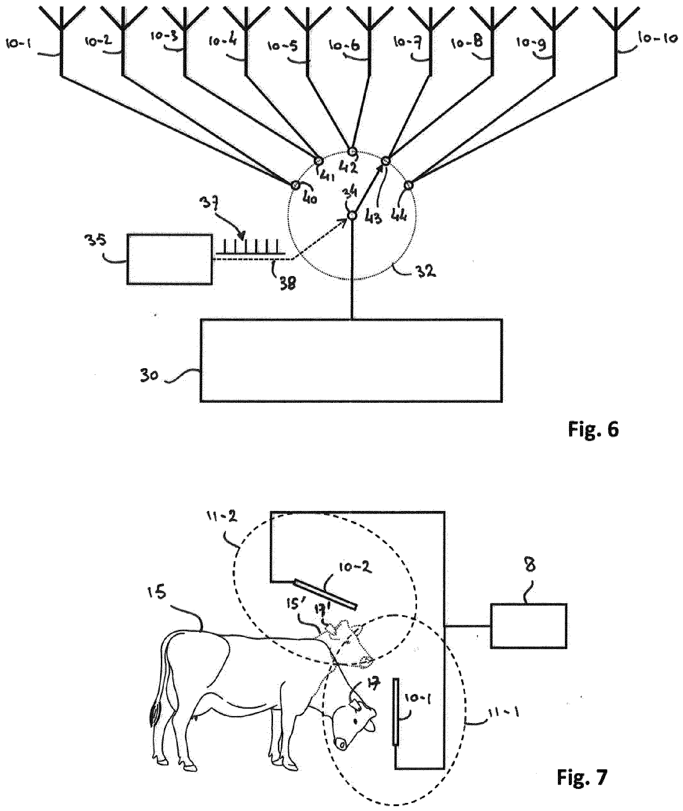

Figure 6 provides a further embodiment of an apparatus 8 in accordance with the present invention. Figure 6 is much similar to figure 4, although there are some differences. The multiplexer element 32 has five poles 40, 41, 42, 43 and 44. The central element 34 is connected with one of the poles 40-44 at the time. The control signal 38, consisting of a pulse sequence 37 causes the connection to switch to a further second pole. The receiver 30 receives the signals via the activated antennas, which are activated during that particular switching cycle. An important difference with the situation in figure 4, is that at each of the poles 40-44, two antennas instead of one antenna are connected. Second pole 40 connects to antennas 10-1 and 10-2. Second pole 41 connects to antennas 10-3 and 10-4. Second pole 42 connects to antennas 10-5 and 10-6. Second pole 43 connects to antennas 10-7 and 10-8 and second pole 44 connects to antennas 10-9 and 10-10. Although the antennas 10-1 to 10-10 are illustrated side by side, in reality they will be arranged differently in a different geometric configuration. In particular, antennas 10-1 and 10-2 are ideally not installed close to each other because otherwise they will be acting as a single antenna, such as for example illustrated in figure 2b. Typically, installation of these antennas will be at a certain distance from each other such that they will not notice each other's influence. This is to prevent electromagnetic interference between the antennas causing them to be electromechanically coupled. However, as will be appreciated one of the advantages of connecting multiple antennas to a single secondary pole 40-44 is that the total number of antennas can be increased while it is still possible to prevent interference by installing them at a certain distance from each other. This has the advantage that the switching weight can be slightly higher because at each switching cycle a number of antennas are activated simultaneously. In the configuration of figure 4, in case 10 antennas where to be used, each antenna would require its own secondary pole and therefore only after 10 switching cycles all antennas have been activated once. In the situation of figure 6 there is only five secondary poles which operate 10 antennas, and in five switching cycles all 10 antennas have been activated.

Figure 7 illustrates a further embodiment of the present invention, wherein apparatus 8 is installed near the milking parlor or alternatively a feeding station. Figure 7 illustrates that multiple antennas 10-1 and 10-2 can be installed such that the ear label 17 will be better detected regardless of the position of the neck of the cow. For example at a feeding station or at a milking parlor, the cow 15 may or may not be fed while residing in its place. While eating, the head of the cow is towards the ground as illustrated in figure 7, and the ear label will be in a range of antenna 10-1. However, if the cow is not eating and has its head up (as illustrated by position 15'), the ear label 17' will be outside the range 11-1 of antenna 10-1. In the illustrated embodiment, the ear label 17' will be within the range 11-2 of antenna 10-2, and hence the cow 15' will be detected by apparatus 8.

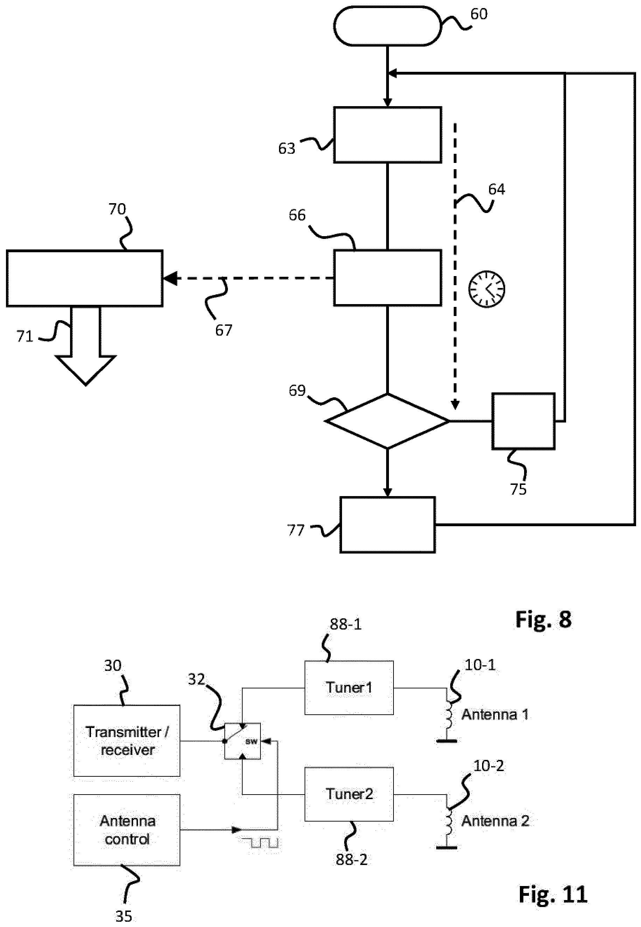

Figure 8 illustrates a further embodiment of the present invention of a method of operating an apparatus 8 in accordance with the present invention. The method starts at 60. The method illustrates the operation of antennas during receipt of electronic data signals from an animal label. In figure 8, step 63 a first antenna (e.g. antenna 10-1 in figure 4) will be activated. The activation will last for the fixed duration of time, as determined by the switching rate. The fixed duration of time is indicated by arrow 64. During this switching cycle 64, electronic data signals can be received in step 66 via the receiver 30. If an electronic data signal is received, as illustrated by arrow 67, it will be processed via a predetermined data processing method 70 and 71. This will be dependent on the specific application. At the end of the switching cycle 64, it will be determined by the controller 35 in step 69 whether there is a next antenna that is to be activated (in this case this will be antenna 10-2). The antenna counter in controller 35 may be incremented in step 75 and the method continues in step 63 for antenna 10-2. However, if the last antenna 10-10 has been activated during a switching cycle 64, then in step 69 it will be determined that all antennas have been activated, and the process in step 77 will be reset to indicate that antenna 10-1 will be the next antenna to be activated again. The process thereafter continues again in step 63. The method illustrated in figure 8 is one way of implementing a round robin type of switching of the antennas 10-1 to 10-10 in figure 4. As may be appreciated, there are many different ways in which the method of the present invention can be implemented and the above description is not to be considered limiting on the invention in that respect.

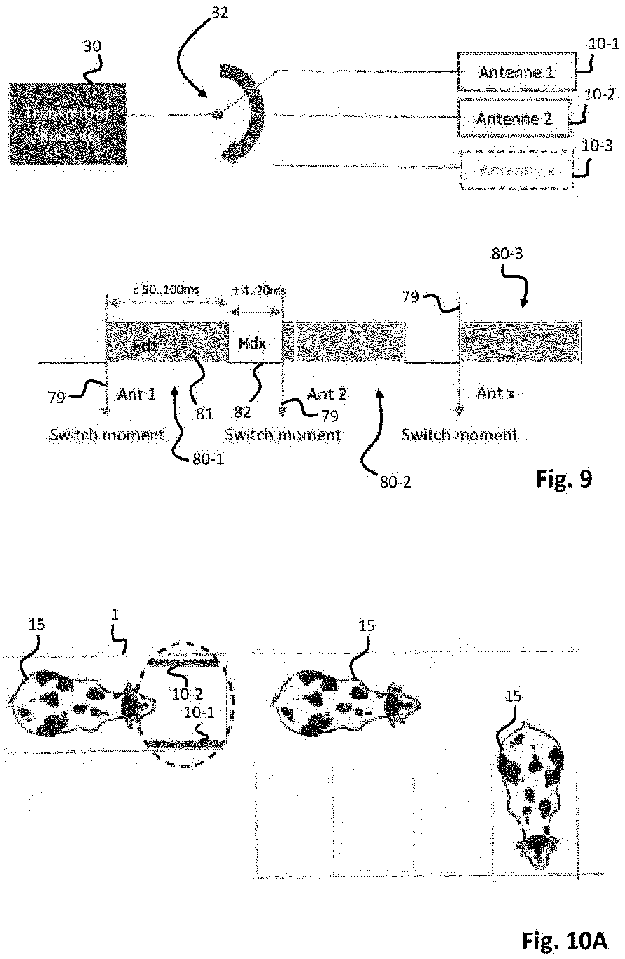

A switching scheme for switching between the antenna's of an apparatus in accordance with an embodiment of the present invention ins schematically illustrated in figure 9. In the figure, a transceiver 30 is illustrated which is arranged for transmitting electronic data signals or an activation field. The apparatus illustrated in figure 9 is suitable for performing full duplex (Fdx) communication via the transceiver 30 for enabling two-way simultaneous communication. If desired, the apparatus illustrated may be operated in half duplex (Hdx) mode wherein it only transmits signals when no incoming signals are received. The apparatus comprises a plurality of antennas 10, of which only three antennas 10-1, 10-2 and 10-3 are illustrated. In the figure, 'antenna x' which is designated with reference numeral 10-3, is illustrated with a dotted line to indicate that any additional antenna exceeding the number of two antennas is optional. A switching element 32 (or multiplexer element) periodically switches to a subsequent antenna 10 of the antennas 10-1 to 10-3. At the end of a full switching round past all antennas 10-1 to 10-3, the switching element 32 will switch back to antenna 10-1 again. The switching element 32 thereby applies a round robin type switching pattern past the antennas 10-1 to 10-3.

The switching scheme is illustrated in figure 9 below the circuit scheme. As follows from the switching scheme, at periodic switching moments 79, the switching element 32 switches to a next antenna 10. The durations between the switching moments 79 indicate the cycles 80. Each cycle 80 has been assigned to an antenna 10, such that the cycles illustrated are designated as cycle 80-1 for antenna 10-1, cycle 80-2 for antenna 10-2, and cycle 80-3 for antenna 10-3. Each switching cycle 80 comprises a first phase 81 wherein the transceiver 30 transmits an activation field, and operates in full duplex (Fdx) mode to enable receiving incoming electronic data signals from any RFID tag (e.g. from neck label 16 or ear tag 17 in the preceding figures). Thereafter, during the listening phase of half duplex (Hdx) phase 82, the transceiver 32 (moet dit niet 30 zijn?) may still receive an electronic data signal until the end of the cycle. If, upon reaching the next switch moment 79, the transceiver 30 is still in the process of receiving an incoming electronic data signal, the transceiver 30 and controller 35 (not illustrated in figure 9) may be configured to either: extend the present cycle 80 by not performing the switching; or discard the electronic signal partly or in full such as to switch to a next antenna 10.

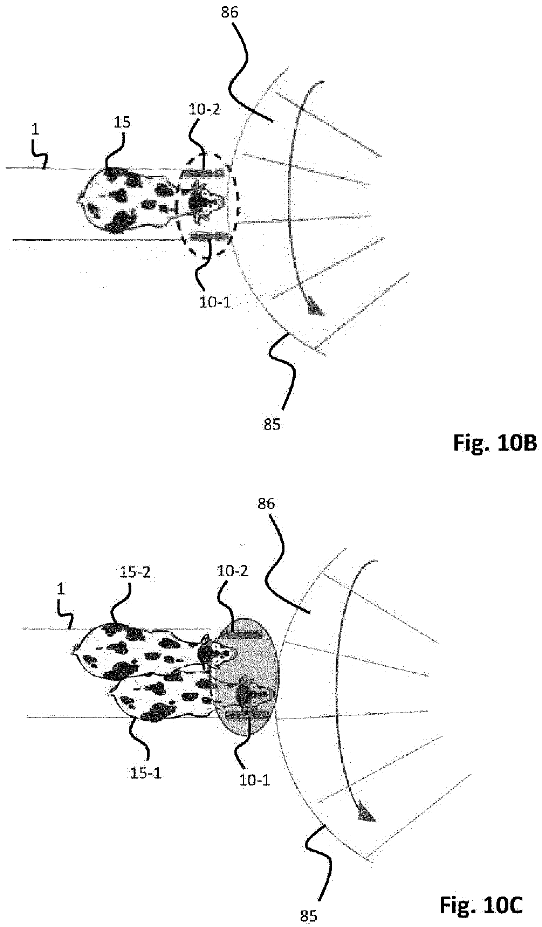

In figures 10A to 10C, various example implementations of embodiments of the present invention are schematically illustrated. In figure 10A, a walkthrough passage 1 is illustrated with antennas located on either side of the passage 1, to obtain good coverage of the passage. In figure 10B a similar walkthrough passage 1 provides access to a rotary milking parlor 85 with rotating stalls 86. Each cow 15 will be provided access to one of the stalls 86, and the antennas 10-1 and 10-2 enable to control this access and to provide data feedback to a management server (not shown) about which animal 15 has been provided access to which stall 86. In figure 10C, two animals 15-1 and 15-2 almost simultaneously reach the end of a walkthrough passage 1 that provide access to a rotary milking parlor 85. Only one of the animals 15 can go into the passing pen 86, and thus the system needs to be able to figure out which animal 15-1 or 15-2 has accessed the pen 86. This may be done on the basis of the received signals. For example, the electronic data signal of cow 15-1 may have been received much stronger by both antenna's 10-1 and 10-2 during their respective cycles 80-1 and 80-2, compared to the electronic data signal of cow 15-2. The system may thus determine that cow 15-1 is the animal that gained access to the passing pen 86.

Figure 11 provides a further schematic illustration of an apparatus of the present invention, illustrating the transceiver 30, the switching element 32, the controller 35 and two antennas 10-1 and 10-2. Each antenna 10-1 and 10-2 respectively is preceded by a tuner 88-1 and 88-2.

The present invention has been described in terms of some specific embodiments thereof. It will be appreciated that the embodiments shown in the drawings and described herein are intended for illustrated purposes only and are not by any manner or means intended to be restrictive on the invention. The context of the invention discussed here is merely restricted by the scope of the appended claims.

## Claims

1. Apparatus (8) for receiving an electronic data signal, in particular an electronic identification signal of a label (16) worn by an animal (15), wherein the apparatus (8) comprises two or more antennas (10) and a receiver element (30),
wherein each antenna (10) of the two or more antennas (10) has an associated reception range (11), wherein the receiver element (30) is communicatively connected to the two or more antennas (10) for receiving the electronic data signal via the antennas (10), and wherein the receiver element (30) is configured for obtaining data conveyed by the electronic data signal upon reception thereof,
**characterised in that**
at least one of the antennas (10) of the two or more antennas (10) is provided within proximity of the other antennas (10) of the two or more antennas (10) such that, when the two or more antennas (10) are activated simultaneously, the two or more antennas influence each other and act as a single larger antenna, and
for extending a reception space spanned by the reception ranges (11) of the antennas (10) such that during use a desired reception space is covered the apparatus (8) further includes switching means (32) for subsequently activating at least one of the antennas (10) in turn while concurrently deactivating the other antennas (10) of the two or more antennas (10).

2. Apparatus (8) according to claim 1, wherein the receiver element (30) is a transceiver element, and wherein the apparatus (8) is configured for, during said activation of the at least one of the antennas (10), performing at least one of: receipt of the electronic data signal; or transmission of an interrogation signal, such as an activation signal.

3. Apparatus (8) according to claim 1 or 2, wherein the switching means (32) are configured for performing said subsequently activating in accordance with a switching frequency defining switching cycles, such that each turn corresponds with one of said switching cycles.

4. Apparatus (8) according to claim 3, wherein:
the switching frequency is between 5 hertz and 100 hertz, preferable between 5 hertz and 50 hertz, more preferable between 10 and 20 hertz, for example 14 hertz.

5. Apparatus (8) according to any one or more of the preceding claims, wherein at least one of:
the receiver (30) is configured for receiving the electronic data signal as a radiofrequency identification (RFID) signal; or
the receiver (30) is configured for receiving the electronic data signal at a carrier frequency within a range of 100 to 200 kHz, for example 134 kilohertz.

6. Apparatus (8) according to any one or more of the preceding claims, wherein the switching means (32) is configured for at least one of:
subsequently activating each of the two or more antennas (10) in turn, such as to activate one of the antennas (10) at a time during each cycle; or
applying a round robin type process for subsequently activating the two or more antennas (10) in turn; or
subsequently activating one switching group in turn while deactivating the other switching groups, wherein each antenna (10) of the two or more antennas (10) is associated with a switching group of a plurality of switching groups, such that each switching group comprises a subset of the two or more antennas (10).

7. Apparatus (8) according to claim 6, wherein each antenna (10) of the two or more antennas (10) is associated with a switching group of a plurality of switching groups, such that each switching group comprises a subset of the two or more antennas (10), wherein the switching means (32) is configured for subsequently activating one switching group in turn while deactivating the other switching groups;
further comprising a controller (35) configured for associating each antenna (10) of the two or more antennas (10) with one of said switching groups, by performing the steps of:
transmitting, via the antenna (10) to be associated, an initialization signal;
measuring a signal strength of a receipt of the initialization signal via each other antenna (10) of the two or more antennas (10); and
optimizing a distribution of the two or more antennas into subsets, by associating the antenna to be associated with a further antenna of the two of more antennas (10) based on the weaker signal strength measurements.

8. Apparatus (8) according to any of the claims 1-5, wherein the two or more antennas (10) comprises two antennas (10) and wherein the switching means (32) includes a switch for alternatingly switching between the two antennas (10) such as to activate one of the antennas (10) at a time.

9. Apparatus (8) according any one or more of the preceding claims, wherein the apparatus (8) comprises a controller (35) and wherein the switching means (32) are controlled by or provided by the controller (35).

10. Apparatus (8) according to claim 9, wherein the controller (35) is configured for at least one of:
controlling the switching dependent on a receipt of data in the electronic data signal; or
performing said subsequently activating in accordance with a switching frequency defining switching cycles, and wherein the controller (35) upon detecting a receipt of data via the electronic data signal during a current cycle, is configured for maintaining said activation of the at least one of the antennas (10) for a further cycle.

11. Apparatus (8) according any one or more of the preceding claims, wherein the switching means (32) comprise at least one of: one or more switches, such as transistors, relays, or electronic switches; an electrically operable single pole double throw switch; an electrically operable single pole multiple way switch, such as a single pole n-way switch; an electrically operable multidirectional selector switch or rotary switch; a multiplexer, such as a time division multiplexer; a circulator switch; a switching network comprising a plurality of switches or switching elements, such as transistors, circulators or relays.

12. Apparatus (8) according to any one or more of the preceding claims, wherein the antennas (10) of the two or more antennas (10) are positioned such as to be geometrically distributed for spanning the reception space in accordance with a predefined shape.

13. Apparatus (8) according to any one or more of the preceding claims, wherein the apparatus (8) is configured for receiving two or more electronic data signals simultaneously from different labels (17), and wherein the apparatus (8) is configured for, based on a signal strength of each of the received electronic data signals, obtaining the data conveyed by the electronic data signal having the largest signal strength.

14. Animal management arrangement comprising one or more entities configured for providing an animal management function, wherein the arrangement is configured for detecting or identifying animals (15) that use the arrangement for providing the animal management function, wherein each of the animals (15) wears a label (16) for providing a wireless electronic data signal conveying identification data of the animal (15);
wherein the arrangement for enabling said detection or identification comprises an apparatus (8) according to any one or more of the preceding claims, wherein the antennas (10) of the two or more antennas (10) span the reception space such as to effectively enable receipt of the electronic data signal of each label (16) residing in the reception space.

15. Animal management arrangement according to claim 14, wherein at least one of:
the arrangement comprises an animal transit facility, the transit facility including physical separators such as fences or walls (2), wherein the physical separators define a transit path for the animals (15), and wherein the antennas (10) are geometrically arranged such that the reception space intersects the transit path; or
the arrangement comprises an animal separation facility, the separation facility including a separation gate (3) and the animal transit facility, wherein the arrangement comprises a controller (35) for operating the separation gate (3) dependent on the identification data obtained from the electronic data signal; or
the arrangement providing at least one animal management function from a group comprising: a milking station, a rotary parlor, a weighing station, a feeding unit, a controllable gate; a lighting unit; a cooling unit; a ventilation unit.

16. Method of operating an apparatus (8) for receiving an electronic data signal, in particular an electronic identification signal of a label (16) worn by an animal (15), wherein the apparatus (8) comprises two or more antennas (10) and a receiver element (30), each of the two or more antennas (10) having a reception range (11) for receiving signals such as the electronic data signal, wherein the receiver element (30) receives the electronic data signal via the antennas (10) and obtains data conveyed by the electronic data signal upon reception thereof via the antennas (10), wherein the method comprises the steps of:
geometrically distributing the two or more antennas (10) for spanning a reception space by the reception ranges (11) of the antennas (10), such that at least one of the antennas (10) of the two or more antennas (10) is provided within proximity of the other antennas (10) of the two or more antennas (10) such that, when the two or more antennas (10) are activated simultaneously, the two or more antennas influence each other and act as a single larger antenna; and
switching between the receiver (30) and the antennas (10) for subsequently establishing connections between at least one antenna (10) and the receiver (30), for subsequently activating at least one of the antennas (10) in turn while concurrently deactivating the other antennas (10) of the two or more antennas (10) such that a desired reception space is covered and for receiving the electronic data signal.

17. Method according to claim 16, wherein the receiver element (30) is a transceiver element, and wherein during said activation of the at least one of the antennas (10), the method includes at least one of the steps of:
receipt of the electronic data signal; or
transmission of an interrogation signal, such as an activation signal.

18. Method according to claim 16 or 17, wherein at least one of:
the switching is performed such as to subsequently activate each of the two or more antennas (10) in turn for activating one of the antennas (10) at a time during each turn; or
the switching is performed such as to apply a round robin type process for subsequently activating the two or more antennas (10) in turn; or
where the antennas (10) are distributed in switching groups, the switching is performed such as to subsequently activate one switching group in turn while deactivating the other switching groups, wherein each antenna (10) is associated with a switching group such that each switching group comprises a subset of the two or more antennas (10); or
where the two or more antennas (10) comprises two antennas (10), the switching is performed such as to alternatingly switching between the two antennas (10) such as to activate one of the antennas (10) at a time; or
wherein the switching is performed by performing the subsequently activating in accordance with a switching frequency defining switching cycles, such that each turn corresponds with one of said switching cycles.

19. Method according to claim 18, wherein the switching is performed by performing the subsequently activating in accordance with a switching frequency defining switching cycles, such that each turn corresponds with one of said switching cycles, and wherein at least one of:
the switching frequency is between 5 hertz and 100 hertz, preferably between 5 hertz and 50 hertz, more preferable between 10 and 20 hertz, such as 14 hertz.

20. Method according to any one of the claims 16-19, wherein at least one of:
the electronic data signal is received as a radiofrequency identification (RFID) signal; or
the electronic data signal is received at a carrier frequency within a range of 100 to 200 kHz, for example 134 kilohertz; or
wherein the antennas (10) of the two or more antennas (10) are positioned such as to be geometrically distributed for spanning the reception space in accordance with a predefined shape; or
the switching is controlled dependent on a receipt of data in the electronic data signal; or
said subsequently activating is performed in accordance with a switching frequency defining switching cycles, and wherein upon detecting a receipt of data via the electronic data signal during a current cycle, said activation of the at least one of the antennas (10) is maintained for a further cycle.

21. Method according to any one or more of the claims 16-20, wherein each antenna (10) of the two or more antennas (10) is associated with a switching group of a plurality of switching groups, such that each switching group comprises a subset of the two or more antennas (10), and wherein subsequently one switching group is activated in turn while deactivating the other switching groups; and
wherein for associating each antenna (10) of the two or more antennas (10) with one of said switching groups, the method includes performing the steps of:
transmitting, via the antenna (10) to be associated, an initialization signal;
measuring a signal strength of a receipt of the initialization signal via each other antenna (10) of the two or more antennas (10); and
optimizing a distribution of the two or more antennas into subsets, by associating the antenna to be associated with a further antenna of the two of more antennas (10) based on the weaker signal strength measurements.

22. Computer program product for operating an apparatus (8) for receiving an electronic data signal, in particular an electronic identification signal of a label (16) worn by an animal (15), wherein the apparatus (8) comprises two or more antennas (10) and a receiver element (30), each of the two or more antennas (10) having a reception range (11) for receiving signals such as the electronic data signal, wherein at least one of the antennas (10) of the two or more antennas (10) is provided within proximity of the other antennas (10) of the two or more antennas (10) such that, when the two or more antennas (10) are activated simultaneously, the two or more antennas influence each other and act as a single larger antenna, wherein the apparatus (8) further comprises a controller (35) and a memory, wherein the computer program product includes instructions which, when loaded into the memory, cause the controller (35) to perform the step of:
processing the electronic data signal received by the receiver (30) via the antennas (10), for obtaining data conveyed by the electronic data signal upon; and
for receiving the electronic data signal, cause the controller (35) to perform the step of:
switching between the receiver (30) and the antennas (10) for subsequently establishing connections between at least one antenna (10) and the receiver (30), for subsequently activating at least one of the antennas (10) in turn while concurrently deactivating the other antennas (10) of the two or more antennas (10) such that a desired reception space is covered and for receiving the electronic data signal.

## Patentansprüche

1. Einrichtung (8) zum Empfangen eines elektronischen Datensignals, insbesondere eines elektronischen Identifikationssignals eines von einem Tier (15) getragenen Etiketts (16), wobei die Einrichtung (8) zwei oder mehr Antennen (10) und ein Empfangselement (30) umfasst,
wobei jede Antenne (10) der zwei oder mehr Antennen (10) eine zugeordnete Empfangsreichweite aufweist (11), wobei das Empfangselement (30) mit den zwei oder mehreren Antennen (10) zum Empfangen des elektronischen Datensignals über die Antennen (10) in Kommunikationsverbindung steht, und wobei das Empfangselement (30) so konfiguriert ist, dass es die von dem elektronischen Datensignal übertragenen Daten bei deren Empfang erhält,
**dadurch gekennzeichnet, dass**
mindestens eine der zwei oder mehr Antennen (10) in der Nähe der anderen Antennen (10) der zwei oder mehr Antennen (10) vorgesehen ist, sodass, wenn die zwei oder mehr Antennen (10) gleichzeitig aktiviert werden, die zwei oder mehr Antennen (10) sich gegenseitig beeinflussen und als eine einzige größere Antenne wirken, und
es einen durch die Empfangsreichweite (11) der Antennen (10) aufgespannten Empfangsbereich erweitert, sodass während des Gebrauchs ein gewünschter Empfangsbereich abgedeckt ist, wobei die Einrichtung (8) ferner eine Schalteinrichtung (32) beinhaltet, um nacheinander mindestens eine der Antennen (10) im Wechsel zu aktivieren und gleichzeitig die anderen Antennen (10) der zwei oder mehr Antennen (10) zu deaktivieren.

2. Einrichtung (8) nach Anspruch 1, wobei das Empfangselement (30) ein Transceiverelement ist und wobei die Einrichtung (8) so konfiguriert ist, dass sie während der Aktivierung der mindestens einen Antenne (10) mindestens eines der Folgenden ausführt: Empfangen des elektronischen Datensignals; oder Senden eines Abfragesignals, beispielsweise eines Aktivierungssignals.

3. Einrichtung (8) nach Anspruch 1 oder 2, wobei die Schalteinrichtung (32) so konfiguriert ist, dass sie das anschließende Aktivieren gemäß einer Schaltfrequenz ausführen, die Schaltzyklen definiert, sodass jede Wechsel einem der Schaltzyklen entspricht.

4. Einrichtung (8) nach Anspruch 3, wobei:
die Schaltfrequenz zwischen 5 Hertz und 100 Hertz, vorzugsweise zwischen 5 Hertz und 50 Hertz, noch bevorzugter zwischen 10 und 20 Hertz, beispielsweise 14 Hertz, liegt.

5. Einrichtung (8) nach einem oder mehreren der vorstehenden Ansprüche, wobei mindestens eines der Folgenden gilt:
der Empfänger (30) ist so konfiguriert, dass er das elektronische Datensignal als Radiofrequenz-Identifikationssignal (RFID-Signal) empfängt; oder
der Empfänger (30) ist so konfiguriert, dass er das elektronische Datensignal bei einer Trägerfrequenz innerhalb eines Bereichs von 100 bis 200 kHz, beispielsweise 134 Kilohertz, empfängt.

6. Einrichtung (8) nach einem oder mehreren der vorstehenden Ansprüche, wobei die Schalteinrichtung (32) für mindestens eines der Folgenden konfiguriert ist:
anschließendes Aktivieren jeder der zwei oder mehr Antennen (10) im Wechsel, sodass während jedes Zyklus jeweils eine der Antennen (10) aktiviert wird; oder
Anwenden eines Rundlaufverfahrens zum anschließenden Aktivieren der zwei oder mehr Antennen (10) im Wechsel; oder
Anschließendes Aktivieren einer Schaltgruppe im Wechsel, während die anderen Schaltgruppen deaktiviert werden, wobei jede Antenne (10) der zwei oder mehr Antennen (10) einer Schaltgruppe einer Vielzahl von Schaltgruppen zugeordnet ist, sodass jede Schaltgruppe eine Teilmenge der zwei oder mehr Antennen (10) umfasst.

7. Einrichtung (8) nach Anspruch 6, wobei jede Antenne (10) der zwei oder mehr Antennen (10) einer Schaltgruppe aus einer Vielzahl von Schaltgruppen zugeordnet ist, sodass jede Schaltgruppe eine Teilmenge der zwei oder mehr Antennen (10) umfasst, wobei die Schalteinrichtung (32) so konfiguriert ist, dass sie anschließend eine Schaltgruppe im Wechsel aktiviert, während die anderen Schaltgruppen deaktiviert werden;
ferner umfassend eine Steuereinheit (35), die so konfiguriert ist, dass sie jede Antenne (10) der zwei oder mehr Antennen (10) einer der Schaltgruppen zuordnet, indem sie die folgenden Schritte ausführt:
Senden eines Initialisierungssignals über die zuzuordnende Antenne (10);
Messen einer Signalstärke eines Empfangs des Initialisierungssignals über jede andere Antenne (10) der zwei oder mehr Antennen (10); und
Optimieren einer Verteilung der zwei oder mehr Antennen in Teilmengen, indem die zuzuordnende Antenne auf der Grundlage der schwächeren Signalstärkemessungen einer weiteren Antenne der zwei oder mehr Antennen (10) zugeordnet wird.

8. Einrichtung (8) nach einem der Ansprüche 1 bis 5, wobei die zwei oder mehr Antennen (10) zwei Antennen (10) umfassen und wobei die Schalteinrichtung (32) einen Schalter zum abwechselnden Umschalten zwischen den zwei Antennen (10) beinhaltet, sodass jeweils eine der Antennen (10) aktiviert wird.

9. Einrichtung (8) nach einem oder mehreren der vorstehenden Ansprüche, wobei die Einrichtung (8) eine Steuereinheit (35) umfasst und wobei die Schalteinrichtung (32) von der Steuereinheit (35) gesteuert wird oder von dieser bereitgestellt wird.

10. Einrichtung (8) nach Anspruch 9, wobei die Steuereinheit (35) für mindestens eines der Folgenden konfiguriert ist:
Steuern des Schaltens in Abhängigkeit von einem Empfang von Daten in dem elektronischen Datensignal; oder
Ausführen des anschließenden Aktivierens gemäß einer Schaltfrequenz, die Schaltzyklen definiert, und wobei die Steuereinheit (35) beim Erfassen eines Empfangs von Daten über das elektronische Datensignal während eines aktuellen Zyklus so konfiguriert ist, dass sie das Aktivieren der mindestens einen der Antennen (10) für einen weiteren Zyklus aufrechterhält.

11. Einrichtung (8) nach einem oder mehreren der vorstehenden Ansprüche, wobei die Schalteinrichtung (32) mindestens eines der Folgenden umfasst: einen oder mehrere Schalter, wie beispielsweise Transistoren, Relais oder elektronische Schalter; einen elektrisch betätigbaren einpoligen Umschalter; einen elektrisch betätigbaren einpoligen Mehrwegeschalter, wie beispielsweise einen einpoligen n-fach-Schalter; einen elektrisch betätigbaren multidirektionalen Wahlschalter oder Drehschalter; einen Multiplexer, wie beispielsweise einen Zeitmultiplexer; einen Zirkulatorschalter; ein Schaltnetzwerk, das eine Vielzahl von Schaltern oder Schaltelementen umfasst, wie beispielsweise Transistoren, Zirkulatoren oder Relais.

12. Einrichtung (8) nach einem oder mehreren der vorstehenden Ansprüche, wobei die Antennen (10) der zwei oder mehr Antennen (10) so positioniert sind, sodass sie geometrisch verteilt sind, um den Empfangsbereich gemäß einer vordefinierten Form aufzuspannen.

13. Einrichtung (8) nach einem oder mehreren der vorstehenden Ansprüche, wobei die Einrichtung (8) so konfiguriert ist, dass sie zwei oder mehr elektronische Datensignale gleichzeitig von verschiedenen Etiketten (17) empfängt, und wobei die Einrichtung (8) so konfiguriert ist, dass sie auf der Grundlage einer Signalstärke jedes der empfangenen elektronischen Datensignale die Daten erhält, die von dem elektronischen Datensignal mit der größten Signalstärke übertragen werden.

14. Tiermanagementanordnung, die eine oder mehrere Einheiten umfasst, die so konfiguriert sind, dass sie eine Tiermanagementfunktion bereitstellen, wobei die Vorrichtung so konfiguriert ist, dass sie Tiere (15) erkennt oder identifiziert, die die Vorrichtung zur Bereitstellung der Tiermanagementfunktion nutzen, wobei jedes der Tiere (15) ein Etikett (16) trägt, um ein drahtloses elektronisches Datensignal bereitzustellen, das Identifikationsdaten des Tieres (15) überträgt;
wobei die Anordnung zum Ermöglichen der Erkennung oder Identifizierung eine Einrichtung (8) gemäß einem oder mehreren der vorstehenden Ansprüche umfasst, wobei die Antennen (10) der zwei oder mehr Antennen (10) den Empfangsbereich so aufspannen, dass sie den Empfang des elektronischen Datensignals jedes im Empfangsbereich befindlichen Etiketts (16) effektiv ermöglichen.

15. Tiermanagementanordnung nach Anspruch 14, wobei mindestens eines der Folgenden gilt:
die Anordnung umfasst eine Tierdurchgangseinrichtung, wobei die Durchgangseinrichtung physische Trennelemente wie Zäune oder Wände (2) beinhaltet, wobei die physischen Trennelemente einen Durchgangsweg für die Tiere (15) definieren und wobei die Antennen (10) geometrisch so angeordnet sind, sodass der Empfangsbereich den Durchgangsweg schneidet; oder
die Anordnung umfasst eine Tiertrenneinrichtung, wobei die Trenneinrichtung ein Trenngatter (3) und die Tierdurchgangseinrichtung beinhaltet, wobei die Anordnung eine Steuereinheit (35) zum Betreiben des Trenngatters (3) in Abhängigkeit von den aus dem elektronischen Datensignal erhaltenen Identifikationsdaten umfasst; oder
wobei die Anordnung mindestens eine Tiermanagementfunktion aus einer Gruppe bereitstellt, die Folgendes umfasst: eine Melkstation, ein Melkkarussell, eine Wiegestation, eine Fütterungseinheit, ein steuerbares Gatter; eine Beleuchtungseinheit; eine Kühleinheit; eine Lüftungseinheit.

16. Verfahren zum Betreiben einer Einrichtung (8) zum Empfangen eines elektronischen Datensignals, insbesondere eines elektronischen Identifikationssignals eines von einem Tier (15) getragenen Etiketts (16), wobei die Einrichtung (8) zwei oder mehr Antennen (10) und ein Empfangselement (30) umfasst, wobei jede der zwei oder mehr Antennen (10) eine Empfangsreichweite (11) zum Empfangen von Signalen wie dem elektronischen Datensignal aufweist, wobei das Empfangselement (30) das elektronische Datensignal über die Antennen (10) empfängt und durch das elektronische Datensignal übertragene Daten bei deren Empfang über die Antennen (10) erhält, wobei das Verfahren die folgenden Schritte umfasst:
geometrisches Verteilen der zwei oder mehr Antennen (10) zum Aufspannen eines Empfangsbereichs durch die Empfangsreichweiten (11) der Antennen (10), sodass mindestens eine der Antennen (10) der zwei oder mehr Antennen (10) in der Nähe der anderen Antennen (10) der zwei oder mehr Antennen (10) vorgesehen ist, sodass, wenn die zwei oder mehr Antennen (10) gleichzeitig aktiviert sind, die zwei oder mehr Antennen sich gegenseitig beeinflussen und als eine einzige größere Antenne wirken; und
Umschalten zwischen dem Empfänger (30) und den Antennen (10), um anschließend Verbindungen zwischen mindestens einer Antenne (10) und dem Empfänger (30) herzustellen, zum anschließenden Aktivieren mindestens einer der Antennen (10) im Wechsel, während gleichzeitig die anderen Antennen (10) der zwei oder mehr Antennen (10) deaktiviert werden, sodass ein gewünschter Empfangsbereich abgedeckt wird, und zum Empfangen des elektronischen Datensignals.

17. Verfahren nach Anspruch 16, wobei das Empfangselement (30) ein Transceiverelement ist und wobei während der Aktivierung der mindestens einen der Antennen (10) das Verfahren mindestens einen der folgenden Schritte beinhaltet:
Empfangen des elektronischen Datensignals; oder
Senden eines Abfragesignals, beispielsweise eines Aktivierungssignals.

18. Verfahren nach Anspruch 16 oder 17, wobei mindestens eines der Folgenden gilt:
die Umschaltung wird so ausgeführt, sodass anschließend jede der zwei oder mehr Antennen (10) im Wechsel aktiviert wird, um während jedes Wechsels jeweils eine der Antennen (10) zu aktivieren; oder
die Umschaltung wird so ausgeführt, dass ein Rundlaufverfahren angewendet wird, um die zwei oder mehr Antennen (10) anschließend im Wechsel zu aktivieren; oder
wobei die Antennen (10) in Schaltgruppen verteilt sind, das Schalten so ausgeführt wird, dass anschließend jeweils eine Schaltgruppe im Wechsel aktiviert wird, während die anderen Schaltgruppen deaktiviert werden, wobei jede Antenne (10) einer Schaltgruppe zugeordnet ist, sodass jede Schaltgruppe eine Teilmenge der zwei oder mehr Antennen (10) umfasst; oder
wobei die zwei oder mehr Antennen (10) zwei Antennen (10) umfassen, die Umschaltung so ausgeführt wird, dass zwischen den zwei Antennen (10) abwechselnd umgeschaltet wird, sodass jeweils eine der Antennen (10) aktiviert wird; oder
wobei das Schalten ausgeführt wird, indem das anschließende Aktivieren gemäß einer Schaltfrequenz ausgeführt wird, die Schaltzyklen definiert, sodass jede Umdrehung einem der Schaltzyklen entspricht.

19. Verfahren nach Anspruch 18, wobei das Schalten ausgeführt wird, indem das anschließende Aktivieren gemäß einer Schaltfrequenz ausgeführt wird, die Schaltzyklen definiert, sodass jede Umdrehung einem der Schaltzyklen entspricht, und wobei mindestens eines der Folgenden gilt:
die Schaltfrequenz liegt zwischen 5 Hertz und 100 Hertz, vorzugsweise zwischen 5 Hertz und 50 Hertz, noch bevorzugter zwischen 10 und 20 Hertz, beispielsweise 14 Hertz.

20. Verfahren nach einem der Ansprüche 16 bis 19, wobei mindestens eines der Folgenden gilt:
das elektronische Datensignal wird als Radiofrequenz-Identifikationssignal (RFID-Signal) empfangen; oder
das elektronische Datensignal wird bei einer Trägerfrequenz innerhalb eines Bereichs von 100 bis 200 kHz, beispielsweise 134 Kilohertz, empfangen; oder
wobei die Antennen (10) der zwei oder mehr Antennen (10) so positioniert sind, sodass sie geometrisch verteilt sind, um den Empfangsbereich gemäß einer vordefinierten Form aufzuspannen; oder
das Schalten in Abhängigkeit von einem Empfang von Daten in dem elektronischen Datensignal gesteuert wird; oder
das anschließende Aktivieren gemäß einer Schaltfrequenz ausgeführt wird, die Schaltzyklen definiert, und wobei beim Erfassen eines Empfangs von Daten über das elektronische Datensignal während eines aktuellen Zyklus das Aktivieren der mindestens einen der Antennen (10) für einen weiteren Zyklus aufrechterhalten wird.

21. Verfahren nach einem oder mehreren der Ansprüche 16 bis 20, wobei jede Antenne (10) der zwei oder mehr Antennen (10) einer Schaltgruppe aus einer Vielzahl von Schaltgruppen zugeordnet ist, sodass jede Schaltgruppe eine Teilmenge der zwei oder mehr Antennen (10) umfasst, und wobei anschließend eine Schaltgruppe im Wechsel aktiviert wird, während die anderen Schaltgruppen deaktiviert werden; und
wobei zum Zuordnen jeder Antenne (10) der zwei oder mehr Antennen (10) zu einer der Schaltgruppen das Verfahren das Ausführen der folgenden Schritte beinhaltet:
Senden eines Initialisierungssignals über die zuzuordnende Antenne (10);
Messen einer Signalstärke eines Empfangs des Initialisierungssignals über jede andere Antenne (10) der zwei oder mehr Antennen (10); und
Optimieren einer Verteilung der zwei oder mehr Antennen in Teilmengen, indem die zuzuordnende Antenne auf der Grundlage der schwächeren Signalstärkemessungen einer weiteren Antenne der zwei oder mehr Antennen (10) zugeordnet wird.

22. Computerprogrammprodukt zum Betreiben einer Einrichtung (8) zum Empfangen eines elektronischen Datensignals, insbesondere eines elektronischen Identifikationssignals eines von einem Tier (15) getragenen Etiketts (16), wobei die Einrichtung (8) zwei oder mehr Antennen (10) und ein Empfangselement (30) umfasst, wobei jede der zwei oder mehr Antennen (10) eine Empfangsreichweite (11) zum Empfangen von Signalen wie dem elektronischen Datensignal aufweist, wobei mindestens eine der Antennen (10) der zwei oder mehr Antennen (10) in der Nähe der anderen Antennen (10) der zwei oder mehr Antennen (10) vorgesehen ist, sodass, wenn die zwei oder mehr Antennen (10) gleichzeitig aktiviert werden, die zwei oder mehr Antennen sich gegenseitig beeinflussen und als eine einzige größere Antenne wirken, wobei die Einrichtung (8) ferner eine Steuereinheit (35) und einen Speicher umfasst, wobei das Computerprogrammprodukt Befehle beinhaltet, die, wenn sie in den Speicher geladen werden, die Steuereinheit (35) veranlassen, den folgenden Schritt auszuführen:
Verarbeiten des vom Empfänger (30) über die Antennen (10) empfangenen elektronischen Datensignals, um die durch das elektronische Datensignal übertragenen Daten zu erhalten; und
um das elektronische Datensignal zu empfangen, Veranlassen der Steuereinheit (35), den folgenden Schritt auszuführen:
Umschalten zwischen dem Empfänger (30) und den Antennen (10), um anschließend Verbindungen zwischen mindestens einer Antenne (10) und dem Empfänger (30) herzustellen, zum anschließenden Aktivieren mindestens einer der Antennen (10) im Wechsel, während gleichzeitig die anderen Antennen (10) der zwei oder mehr Antennen (10) deaktiviert werden, sodass ein gewünschter Empfangsbereich abgedeckt wird, und zum Empfangen des elektronischen Datensignals.

## Revendications

1. Appareil (8) pour recevoir un signal de données électroniques, en particulier un signal d'identification électronique d'une étiquette (16) portée par un animal (15), dans lequel l'appareil (8) comprend deux antennes (10) ou plus et un élément récepteur (30),
dans lequel chaque antenne (10) des deux antennes (10) ou plus a une plage de réception associée (11), dans lequel l'élément récepteur (30) est connecté en communication aux deux antennes (10) ou plus pour recevoir le signal de données électroniques via les antennes (10), et dans lequel l'élément récepteur (30) est configuré pour obtenir des données transmises par le signal de données électroniques lors de sa réception,
**caractérisé en ce que**
au moins une des antennes (10) des deux antennes ou plus (10) est placée à proximité des autres antennes (10) des deux antennes ou plus (10) de sorte que, lorsque les deux antennes ou plus (10) sont activées simultanément, les deux antennes ou plus s'influencent mutuellement et agissent comme une seule antenne plus grande, et
pour étendre un espace de réception couvert par les plages de réception (11) des antennes (10) de telle sorte que, pendant l'utilisation, un espace de réception souhaité soit couvert, l'appareil (8) comprend en outre des moyens de commutation (32) pour activer ultérieurement au moins l'une des antennes (10) à tour de rôle tout en désactivant simultanément les autres antennes (10) des deux antennes ou plus (10).

2. Appareil (8) selon la revendication 1, dans lequel l'élément récepteur (30) est un élément émetteur-récepteur, et dans lequel l'appareil (8) est configuré pour, pendant ladite activation de l'au moins une des antennes (10), effectuer au moins l'une des opérations suivantes : réception du signal de données électroniques ; ou transmission d'un signal d'interrogation, tel qu'un signal d'activation.

3. Appareil (8) selon la revendication 1 ou 2, dans lequel les moyens de commutation (32) sont configurés pour effectuer ladite activation ultérieure conformément à une fréquence de commutation définissant des cycles de commutation, de sorte que chaque tour corresponde à l'un desdits cycles de commutation.

4. Appareil (8) selon la revendication 3, dans lequel :
la fréquence de commutation est comprise entre 5 hertz et 100 hertz, de préférence entre 5 hertz et 50 hertz, plus préférablement entre 10 et 20 hertz, par exemple 14 hertz.

5. Appareil (8) selon l'une ou plusieurs des revendications précédentes, dans lequel au moins l'un des éléments suivants :
le récepteur (30) est configuré pour recevoir le signal de données électroniques en tant que signal d'identification par radiofréquence (RFID) ; ou
le récepteur (30) est configuré pour recevoir le signal de données électroniques à une fréquence porteuse comprise entre 100 et 200 kHz, par exemple 134 kilohertz.

6. Appareil (8) selon l'une ou plusieurs des revendications précédentes, dans lequel les moyens de commutation (32) sont configurés pour au moins l'un des éléments suivants consistant à :
activer successivement chacune des deux antennes ou plus (10) à tour de rôle, de manière à activer une des antennes (10) à la fois au cours de chaque cycle ; ou
appliquer un processus de type à tour de rôle pour activer ensuite les deux antennes ou plus (10) à tour de rôle ; ou
activer ensuite un groupe de commutation à son tour tout en désactivant les autres groupes de commutation, dans lequel chaque antenne (10) des deux antennes ou plus (10) est associée à un groupe de commutation d'une pluralité de groupes de commutation, de sorte que chaque groupe de commutation comprenne un sous-ensemble des deux antennes ou plus (10).

7. Appareil (8) selon la revendication 6, dans lequel chaque antenne (10) des deux ou plusieurs antennes (10) est associée à un groupe de commutation d'une pluralité de groupes de commutation, de sorte que chaque groupe de commutation comprend un sous-ensemble des deux ou plusieurs antennes (10), dans lequel les moyens de commutation (32) sont configurés pour activer ultérieurement un groupe de commutation à son tour tout en désactivant les autres groupes de commutation ;
comprenant en outre un contrôleur (35) configuré pour associer chaque antenne (10) des deux antennes ou plus (10) à l'un desdits groupes de commutation, en effectuant les étapes suivantes consistant à :
transmettre, par l'intermédiaire de l'antenne (10) à associer, un signal d'initialisation ;
mesurer une intensité de signal d'une réception du signal d'initialisation via chaque autre antenne (10) des deux antennes ou plus (10) ; et
optimiser une répartition des deux antennes ou plus en sous-ensembles, en associant l'antenne à associer à une autre antenne des deux antennes ou plus (10) sur la base des mesures de puissance de signal les plus faibles.

8. Appareil (8) selon l'une quelconque des revendications 1 à 5, dans lequel les deux antennes (10) ou plus comprennent deux antennes (10) et dans lequel les moyens de commutation (32) comprennent un commutateur pour commuter alternativement entre les deux antennes (10) de manière à activer une des antennes (10) à la fois.

9. Appareil (8) selon l'une quelconque ou plusieurs des revendications précédentes, dans lequel l'appareil (8) comprend un contrôleur (35) et dans lequel les moyens de commutation (32) sont commandés par ou fournis par le contrôleur (35).

10. Appareil (8) selon la revendication 9, dans lequel le contrôleur (35) est configuré pour au moins l'un des éléments suivants consistant à :
contrôler la commutation en fonction de la réception de données dans le signal de données électroniques ; ou
effectuer ladite activation ultérieure conformément à une fréquence de commutation définissant des cycles de commutation, et dans lequel le contrôleur (35) lors de la détection d'une réception de données via le signal de données électroniques pendant un cycle en cours, est configuré pour maintenir ladite activation de l'au moins une des antennes (10) pour un cycle supplémentaire.

11. Appareil (8) selon l'une ou plusieurs des revendications précédentes, dans lequel les moyens de commutation (32) comprennent au moins l'un des éléments suivants : un ou plusieurs commutateurs, tels que des transistors, des relais ou des commutateurs électroniques ; un commutateur unipolaire à double jet à commande électrique ; un commutateur unipolaire à plusieurs voies à commande électrique, tel qu'un commutateur unipolaire à n voies ; un commutateur sélecteur multidirectionnel ou un commutateur rotatif à commande électrique ; un multiplexeur, tel qu'un multiplexeur à commutation temporelle ; un commutateur circulateur ; un réseau de commutation comprenant une pluralité de commutateurs ou d'éléments de commutation, tels que des transistors, des circulateurs ou des relais.

12. Appareil (8) selon l'une ou plusieurs des revendications précédentes, dans lequel les antennes (10) des deux antennes (10) ou plus sont positionnées de manière à être réparties géométriquement pour couvrir l'espace de réception conformément à une forme prédéfinie.

13. Appareil (8) selon l'une ou plusieurs des revendications précédentes, dans lequel l'appareil (8) est configuré pour recevoir deux ou plusieurs signaux de données électroniques simultanément à partir de différentes étiquettes (17), et dans lequel l'appareil (8) est configuré pour, sur la base d'une intensité de signal de chacun des signaux de données électroniques reçus, obtenir les données transportées par le signal de données électroniques ayant la plus grande intensité de signal.

14. Dispositif de gestion des animaux comprenant une ou plusieurs entités configurées pour fournir une fonction de gestion des animaux, dans lequel le dispositif est configuré pour détecter ou identifier les animaux (15) qui utilisent le dispositif pour fournir la fonction de gestion des animaux, dans lequel chacun des animaux (15) porte une étiquette (16) pour fournir un signal de données électronique sans fil transportant des données d'identification de l'animal (15) ;
dans lequel l'agencement permettant ladite détection ou identification comprend un appareil (8) selon l'une quelconque ou plusieurs des revendications précédentes, dans lequel les antennes (10) des deux antennes (10) ou plus couvrent l'espace de réception de manière à permettre efficacement la réception du signal de données électroniques de chaque étiquette (16) résidant dans l'espace de réception.

15. Dispositif de gestion des animaux selon la revendication 14, comportant au moins l'un des éléments suivants :
le dispositif comprend une installation de transit pour animaux, l'installation de transit comprenant des séparateurs physiques tels que des clôtures ou des murs (2), dans lequel les séparateurs physiques définissent un chemin de transit pour les animaux (15), et dans lequel les antennes (10) sont disposées géométriquement de telle sorte que l'espace de réception coupe le chemin de transit ; ou
le dispositif comprend une installation de séparation des animaux, l'installation de séparation comprenant une barrière de séparation (3) et l'installation de transit des animaux, le dispositif comprenant un contrôleur (35) pour actionner la barrière de séparation (3) en fonction des données d'identification obtenues à partir du signal de données électronique ; ou
le dispositif assurant au moins une fonction de gestion des animaux à partir d'un groupe comprenant : une station de traite, une salle de traite rotative, une station de pesée, une unité d'alimentation, une porte contrôlable ; une unité d'éclairage ; une unité de refroidissement ; une unité de ventilation.

16. Procédé de fonctionnement d'un appareil (8) pour recevoir un signal de données électroniques, en particulier un signal d'identification électronique d'une étiquette (16) portée par un animal (15), dans lequel l'appareil (8) comprend deux antennes (10) ou plus et un élément récepteur (30), chacune des deux antennes (10) ou plus ayant une plage de réception (11) pour recevoir des signaux tels que le signal de données électroniques, dans lequel l'élément récepteur (30) reçoit le signal de données électroniques via les antennes (10) et obtient des données transmises par le signal de données électroniques lors de sa réception via les antennes (10), dans lequel le procédé comprend les étapes de :
la distribution géométrique des deux antennes (10) ou plus pour couvrir un espace de réception par les plages de réception (11) des antennes (10), de sorte qu'au moins une des antennes (10) des deux antennes (10) ou plus soit placée à proximité des autres antennes (10) des deux antennes (10) ou plus de sorte que, lorsque les deux antennes (10) ou plus sont activées simultanément, les deux antennes ou plus s'influencent mutuellement et agissent comme une seule antenne plus grande ; et
la commutation entre le récepteur (30) et les antennes (10) pour établir ultérieurement des connexions entre au moins une antenne (10) et le récepteur (30), pour activer ultérieurement au moins une des antennes (10) à son tour tout en désactivant simultanément les autres antennes (10) des deux antennes ou plus (10) de sorte qu'un espace de réception souhaité soit couvert et pour recevoir le signal de données électroniques.

17. Procédé selon la revendication 16, dans lequel l'élément récepteur (30) est un élément émetteur-récepteur, et dans lequel, pendant ladite activation de l'au moins une des antennes (10), le procédé comprend au moins l'une des étapes de :
la réception du signal de données électroniques ; ou
la transmission d'un signal d'interrogation, tel qu'un signal d'activation.

18. Procédé selon la revendication 16 ou 17, comportant au moins l'un des éléments suivants :
la commutation est effectuée de manière à activer ensuite chacune des deux antennes (10) ou plus à tour de rôle pour activer l'une des antennes (10) à la fois pendant chaque tour ; ou
la commutation est effectuée de manière à appliquer un processus de type à tour de rôle pour activer ensuite les deux antennes (10) ou plus à tour de rôle ; ou
lorsque les antennes (10) sont réparties en groupes de commutation, la commutation est effectuée de manière à activer ultérieurement un groupe de commutation à son tour tout en désactivant les autres groupes de commutation, chaque antenne (10) étant associée à un groupe de commutation de telle sorte que chaque groupe de commutation comprenne un sous-ensemble des deux antennes (10) ou plus ; ou
lorsque les deux antennes ou plus (10) comprennent deux antennes (10), la commutation est effectuée de manière à commuter alternativement entre les deux antennes (10) de manière à activer une des antennes (10) à la fois ; ou
dans lequel la commutation est effectuée en effectuant l'activation ultérieure conformément à une fréquence de commutation définissant des cycles de commutation, de sorte que chaque tour corresponde à l'un desdits cycles de commutation.

19. Procédé selon la revendication 18, dans lequel la commutation est effectuée en effectuant l'activation ultérieure conformément à une fréquence de commutation définissant des cycles de commutation, de sorte que chaque tour corresponde à l'un desdits cycles de commutation, et comportant au moins l'un des éléments suivants :
la fréquence de commutation est comprise entre 5 hertz et 100 hertz, de préférence entre 5 hertz et 50 hertz, plus préférablement entre 10 et 20 hertz, par exemple 14 hertz.

20. Procédé selon l'une quelconque des revendications 16 à 19, comportant au moins l'un des éléments suivants :
le signal de données électroniques est reçu sous la forme d'un signal d'identification par radiofréquence (RFID) ; ou
le signal de données électroniques est reçu à une fréquence porteuse comprise entre 100 et 200 kHz, par exemple 134 kilohertz ; ou
dans lequel les antennes (10) des deux antennes (10) ou plus sont positionnées de manière à être réparties géométriquement pour couvrir l'espace de réception conformément à une forme prédéfinie ; ou
la commutation est commandée en fonction de la réception de données dans le signal de données électroniques ; ou
ladite activation ultérieure est effectuée conformément à une fréquence de commutation définissant des cycles de commutation, et dans lequel, lors de la détection d'une réception de données via le signal de données électronique pendant un cycle en cours, ladite activation de l'au moins une des antennes (10) est maintenue pour un cycle supplémentaire.

21. Procédé selon l'une quelconque ou plusieurs des revendications 16 à 20, dans lequel chaque antenne (10) des deux antennes ou plus (10) est associée à un groupe de commutation d'une pluralité de groupes de commutation, de sorte que chaque groupe de commutation comprenne un sous-ensemble des deux antennes ou plus (10), et dans lequel un groupe de commutation est ensuite activé à son tour tout en désactivant les autres groupes de commutation ; et
dans lequel, pour associer chaque antenne (10) des deux antennes (10) ou plus à l'un desdits groupes de commutation, le procédé comprend l'exécution des étapes consistant à :
transmettre, via l'antenne (10) à associer, un signal d'initialisation ;
mesurer une intensité de signal d'une réception du signal d'initialisation via chaque autre antenne (10) des deux antennes ou plus (10) ; et
optimiser une répartition des deux antennes ou plus en sous-ensembles, en associant l'antenne à associer à une autre antenne des deux antennes ou plus (10) sur la base des mesures de puissance de signal les plus faibles.

22. Produit formant programme informatique pour faire fonctionner un appareil (8) pour recevoir un signal de données électroniques, en particulier un signal d'identification électronique d'une étiquette (16) portée par un animal (15), dans lequel l'appareil (8) comprend deux antennes ou plus (10) et un élément récepteur (30), chacune des deux antennes ou plus (10) ayant une plage de réception (11) pour recevoir des signaux tels que le signal de données électroniques, dans lequel au moins une des antennes (10) des deux antennes ou plus (10) est prévue à proximité des autres antennes (10) des deux antennes ou plus (10) de telle sorte que, lorsque les deux antennes ou plus (10) sont activées simultanément, les deux antennes ou plus s'influencent mutuellement et agissent comme une seule antenne plus grande, dans lequel l'appareil (8) comprend en outre un contrôleur (35) et une mémoire, dans lequel le produit formant programme informatique comprend des instructions qui, lorsqu'elles sont chargées dans la mémoire, amènent le contrôleur (35) à effectuer l'étape de :
traitement du signal de données électroniques reçu par le récepteur (30) via les antennes (10), pour obtenir des données transmises par le signal de données électroniques ; et pour recevoir le signal de données électroniques, amener le contrôleur (35) à effectuer l'étape de :
commutation entre le récepteur (30) et les antennes (10) pour établir ultérieurement des connexions entre au moins une antenne (10) et le récepteur (30), pour activer ultérieurement au moins l'une des antennes (10) à son tour tout en désactivant simultanément les autres antennes (10) des deux antennes ou plus (10) de sorte qu'un espace de réception souhaité soit couvert et pour recevoir le signal de données électroniques.
